(19) **Europäisches Patentamt** / **European Patent Office** / **Office européen des brevets**

(11) **EP 3 780 805 B1**

(12) **EUROPEAN PATENT SPECIFICATION**

(45) Date of publication and mention
of the grant of the patent:
**01.06.2022 Bulletin 2022/22**

(21) Application number: **18921060.2**

(22) Date of filing: **31.05.2018**

(51) International Patent Classification (IPC):
*H04W 72/08* (2009.01)    *H04B 1/715* (2011.01)
*H04W 72/04* (2009.01)

(52) Cooperative Patent Classification (CPC):
**H04W 72/085; H04B 1/715; H04W 4/42;**
H04B 2001/7154; H04W 72/044

(86) International application number:
**PCT/JP2018/021029**

(87) International publication number:
**WO 2019/229952 (05.12.2019 Gazette 2019/49)**

(54) **WIRELESS COMMUNICATION APPARATUS, WIRELESS COMMUNICATION SYSTEM, WIRELESS COMMUNICATION METHOD, CONTROL CIRCUIT, AND STORAGE MEDIUM**

DRAHTLOSES KOMMUNIKATIONSGERÄT, DRAHTLOSES KOMMUNIKATIONSSYSTEM, DRAHTLOSES KOMMUNIKATIONSVERFAHREN, STEUERKREIS UND SPEICHERMEDIUM

APPAREIL DE COMMUNICATION SANS FIL, SYSTÈME DE COMMUNICATION SANS FIL, PROCÉDÉ DE COMMUNICATION SANS FIL, CIRCUIT DE COMMANDE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.02.2021 Bulletin 2021/07**

(73) Proprietor: **Mitsubishi Electric Corporation Tokyo 100-8310 (JP)**

(72) Inventor: **SUZUKI, Kazumasa Tokyo 100-8310 (JP)**

(74) Representative: **Pfenning, Meinig & Partner mbB Patent- und Rechtsanwälte Theresienhöhe 11a 80339 München (DE)**

(56) References cited:
**EP-A1- 1 612 980        WO-A1-2005/078976**
**WO-A1-2014/045401    WO-A1-2017/130317**
**JP-A- H06 343 066       JP-A- 2001 244 851**
**JP-A- 2006 345 274       US-A1- 2005 226 198**

- **INTERDIGITAL: "HARQ entities in DC-HSDPA", 3GPP DRAFT; R2-084136, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050319278, [retrieved on 2008-08-12]**

**Description**

Field

The present invention relates to a wireless communication apparatus, a wireless communication system, a wireless communication method for performing radio communication by a frequency hopping method, a control circuit configured to control a wireless communication apparatus, and a storage medium in which a program for controlling a wireless communication apparatus is stored.

Background

A wireless train control system that has attracted attention in recent years performs radio communication between a train and a wireless base station installed along a railroad track, and performs operation control, speed control, and the like of the train on the basis of information transmitted by the radio communication. The wireless train control system does not require a track circuit and is thus advantageous in terms of introduction cost, maintenance cost, and the like as compared to a conventional train operation control system using a fixed block section. Moreover, the wireless train control system can construct a flexible block section not bound by a fixed section, thereby making it possible to increase the density of train services, and thus additionally leading to an advantage in terms of operation cost.

In terms of cost, the wireless train control system often uses a 2.4 GHz ISM (Industry Science Medical) band that does not require a license for wireless communication between ground and train. However, the 2.4-GHz ISM band is widely used in other systems such as a wireless local area network (LAN) and a Bluetooth (registered trademark) system. The use of these other systems in a train, in a building along a railway line, and in the like can be a significant source of interference for the wireless train control system. For that reason, the wireless train control system needs to take measures against interference from the other systems in order to perform stable communication. One of the measures against interference from the other systems is to actively avoid interference by wireless communication based on a frequency hopping method. Patent Literature 1 discloses a technique in which each base station has two hopping patterns using different frequency channels and selects, from the two hopping patterns, the frequency channel to be used for each slot depending on a radio waves condition.

Document EP 1 612 980 A1 discloses a base station apparatus comprising: a scheduler that determines a schedule to transmit transmission data to communication terminal apparatuses based on communication quality for subcarrier blocks obtained by dividing a multicarrier communication band into a plurality of portions; a subcarrier block selection section that arranges transmission data in subcarrier blocks whose communication quality is equal to or higher than predetermined quality for the respective communication terminal apparatuses; a frequency hopping section that subjects transmission data to frequency hopping in predetermined time units and arranges the transmission data in subcarriers in the subcarrier blocks; and a transmission section that transmits the transmission data arranged in the subcarriers.

Document US 2005/226198 A1 discloses a method for communication in a sequence of frames, each frame including multiple time slots, the method comprising: assigning a respective time slot to each of a plurality of mobile units, while reserving an unassigned time slot; during a first frame, transmitting an uplink signal carrying first uplink data over the air to a base station from one of the mobile units in the respective time slot; transmitting a downlink signal from the base station to the one of the mobile units indicating that retransmission of the first uplink data is required; and responsively to the downlink signal, during a second frame subsequent to the first frame, transmitting the uplink signal both in the respective time slot and in the reserved time slot so as to carry the first uplink data and second uplink data over the air to the base station.

Document WO 2005/078976 A1 discloses methods and apparatus to carry out retransmission of erroneous packets by taking advantage of time/frequency/space diversity.

Document INTERDIGITAL, "HARQ entities in DC-HSDPA", 3GPP DRAFT; R2-084136, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20080812), no. Jeju; 20080812, XP050319278 investigates the potential performance gains of using a cell-independent HARQ for dual-cell operation, compared to a cell-dependent HARQ.

Citation List

Patent Literature

Patent Literature 1: Japanese Patent Application Laid-open No. 2009-171078

Summary

Technical Problem

Generally, a cellular system having a cell configuration experiences less interference from the other systems than the wireless train control system does, and so the cell size is determined such that the reception level of a receiver at the edge of a cell is close to a reception sensitivity thereof. Therefore, the cell size largely depends on a transmission power of a transmitter and the reception sensitivity of the receiver.

On the other hand, in the wireless train control system, base stations are placed so that the reception level of the receiver at the edge of the cell is higher than the reception sensitivity thereof in order to be able to establish communication even when experiencing high interference from the other systems. Therefore, in the wireless train control system, radio waves from a remoter base station using the same frequency channel may more possibly come into the system as some interference, as compared to the general cellular systems. Especially in the wireless train control system, the base stations are often placed on a straight line with good visibility, and thus radio waves from a base station placed far away may come into the system at a high level depending on geographical conditions. This also applies to a system that performs frequency hopping. In a certain base station, radio waves from a base station having the same hopping pattern as that of the certain base station may collide with the latter in the frequency channel used by the certain base station, resulting in occurrence of interference. Therefore, the base stations to which the same hopping pattern is assigned are desirably placed at locations as far apart as possible.

In Patent Literature 1, when the frequency channels include 16 channels and each base station holds two different hopping patterns, the same hopping pattern is assigned to base stations that are eight cells apart at the maximum in principle. This is because, when two different hopping patterns out of 16 hopping patterns corresponding to the 16 frequency channels are assigned to each base station, eight (16/2=8) base stations at the maximum are assigned the hopping patterns. Therefore, in a base station described in Patent Literature 1, the distance between the base stations to which the same hopping pattern is assigned is one half that in a case where a base station does not have two hopping patterns, thereby resulting in a remarkable source of interference for electric power.

The present invention has been made in view of the above circumstances, and an object of the present invention is to provide a wireless communication apparatus that can perform radio communication while minimizing interference when performing the radio communication based on a frequency hopping method.

Solution to Problem

The invention is set out in the appended set of claims.

Advantageous Effects of Invention

The wireless communication apparatus according to the present invention has an advantageous effect of being able to perform radio communication while minimizing interference when performing the radio communication under the frequency hopping method.

Brief Description of Drawings

FIG. 1 is a diagram illustrating an example of the configuration of a wireless communication system

FIG. 2 is a block diagram illustrating an example of the configuration of a ground station

FIG. 3 is a block diagram illustrating an example of the configuration of a train

FIG. 4 is a block diagram illustrating an example of the configuration of an on-board station

FIG. 5 is a diagram illustrating an example of the configuration of a frame used when radio communication is performed between the on-board station and the ground station

FIG. 6 is a diagram illustrating an example of a relationship between frequency channels used by each ground station and slots in each frame.

FIG. 7 is a diagram illustrating resources used by a ground station 1A

FIG. 8 is a diagram illustrating an example of resource allocation for the ground station 1A when a data sequence is generated for one slot per frame among the resources used.

FIG. 9 is a table illustrating an example of evaluation values of transmission quality classified into classes in a radio environment monitoring apparatus

FIG. 10 is a diagram illustrating an example of resource allocation in a resource allocation unit of the ground station.

FIG. 11 is a flowchart illustrating an example of a resource allocation algorithm in the resource allocation unit .

FIG. 12 is a figure illustrating an example of a table that represents a relationship between evaluation values of transmission quality and transmission error rates, the table being held by the resource allocation unit

FIG. 13 is a diagram illustrating a first example of resource allocation in a case where the resource allocation unit performs twc repeated transmissions on each sequence that is defined in a manner that two data sequences are set per frame.

FIG. 14 is a diagram illustrating a state in which the transmission quality of a frequency channel 0 has deteriorated from the states of the transmission quality of frequency channels illustrated in FIG. 13.

FIG. 15 is a diagram illustrating a second example of resource allocation in a case where the resource allocation unit performs twc repeated transmissions on each sequence that is defined in a manner that the two data sequences are set per frame.

FIG. 16 is a flowchart illustrating an example of a resource allocation algorithm in the resource allocation unit .

FIG. 17 is a diagram illustrating an example of resource allocation in a case where the resource allocation unit performs two repeated transmissions on each sequence that is defined in a manner that two data sequences are set per frame, in accordance with the resource allocation algorithm of the example of an implementation of the first embodiment.

FIG. 18 is a diagram illustrating an example of resource allocation in a case where the resource allocation unit according to the example of an implementation of the second embodiment performs twc repeated transmissions on each sequence that is defince in a manner that two data sequences are set per frame.

FIG. 19 is a diagram illustrating an example of a case where processing circuitry owned by the ground station or the on-board station is constructed by dedicated hardware.

FIG. 20 is a diagram illustrating an example of a case where the processing circuitry of the ground station or the on-board station is constructed of a control circuit having a processor.

Description

A wireless communication apparatus, a wireless communication system, and a wireless communication method according to embodiments of the present invention will now be described in detail with reference to the drawings. Note that the present invention is not necessarily limited by these embodiments.

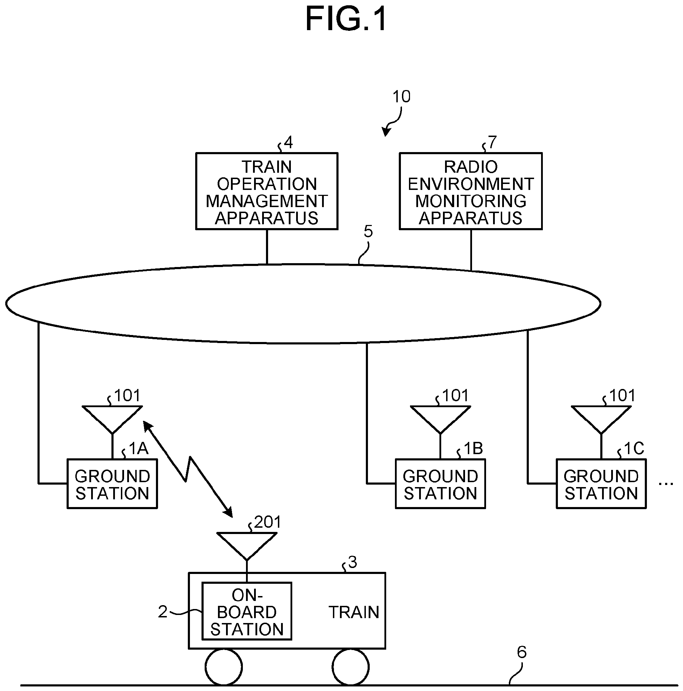

First Implementation . FIG. 1 is a diagram illustrating an example of the configuration of a wireless communication system 10 according to an example of an implementation of a first embodiment of the present invention. The wireless communication system 10 includes ground stations 1A, 1B, and 1C, a train 3, a train operation management apparatus 4, a wired network 5, and a radio environment monitoring apparatus 7.

The ground stations 1A to 1C are wireless communication apparatuses installed along a railroad track 6 to establish wireless communication with the train 3. The ground stations 1A to 1C are installed along the track 6 at intervals of, for example, several tens of meters to several hundreds of meters. The ground stations 1A to 1C may be referred to as ground stations 1 when not to be distinguished from one another. Note that the ground stations 1 each include an antenna 101 illustrated in FIG. 1. The train 3 runs on the track 6. The train 3 also includes an on-board station 2. The on-board station 2 is a wireless communication apparatus that is mounted on the train 3 and performs wireless communication with the ground stations 1. Note that the on-board station 2 includes an antenna 201 illustrated in FIG. 1.

The train operation management apparatus 4 is connected to the wired network 5 and manages the operation of the train 3 within its jurisdiction. Although FIG. 1 illustrates an example with only one train 3, the wireless communication system 10 can manage operations of two or more trains 3. The wired network 5 is a wired network to which the ground stations 1, the train operation management apparatus 4, and the radio environment monitoring apparatus 7 are connected. The radio environment monitoring apparatus 7 collects radio environments measured by the ground stations 1 and the on-board station 2 and makes a database of them.

In the wireless communication system 10, the plurality of the ground stations 1 installed on the ground and the on-board station 2 mounted on the train 3 perform frequency hopping system radio communication in which a frequency channel used is switched for each time slot. In the following description, the time slot may be simply referred to as a slot.

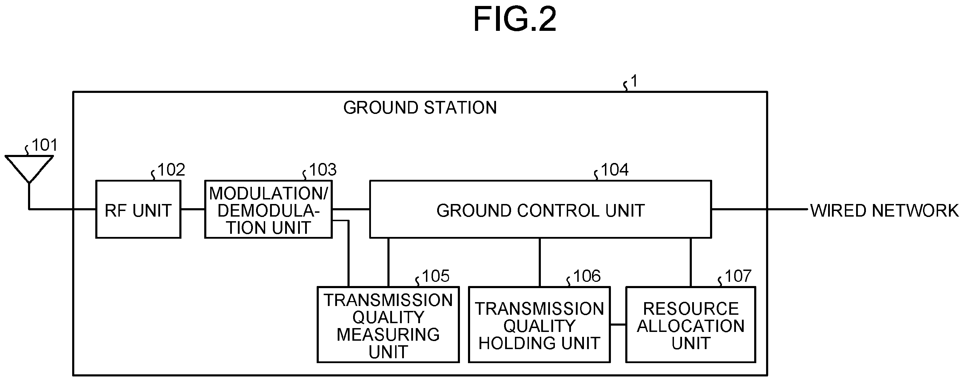

The configuration of the ground station 1 will be described. FIG. 2 is a block diagram illustrating an example of the configuration of the ground station 1 according to the example of an implementation of the first embodiment. The ground station 1 includes the antenna 101, a radio frequency (RF) unit 102, a modulation/demodulation unit 103, a ground control unit 104, a transmission quality measuring unit 105, a transmission quality holding unit 106, and a resource allocation unit 107.

The antenna 101 emits a radio signal into the air at the time of transmission, and receives a radio signal coming thereto through propagating in the air. The RF unit 102 converts a digitally modulated signal into an analog signal, performs frequency conversion on the analog signal into a carrier frequency signal, and outputs the signal to the antenna 101 at the time of transmission, while, at the time of reception, the unit 102 performs frequency conversion on an analog signal received by the antenna 101 into a baseband signal, and converts the signal into a digital signal. The modulation/demodulation unit 103 performs coding, modulation processing, and the like on a transmit data sequence at the time of transmission, while, at the time of reception, the unit 103 performs demodulation, decoding processing, and the like on a received signal. The ground control unit 104 is a control station that controls transmission of a data sequence acquired from the wired network 5 at the time of transmission, while, at the time of reception, the unit 104 controls output of a received data sequence to the wired network 5. When transmitting the data sequence, the ground control unit 104 controls the transmission of the data sequence using resources allocated by the resource allocation unit 107, that is, slots and frequency channels.

The transmission quality measuring unit 105 measures radio waves in a frequency band used by the ground station 1 during operation, and evaluates the transmission quality of the ground station 1 on the basis of a signal power value of a desired wave and an interference power value of an interfering wave and the like. The transmission quality holding unit 106 holds information about the transmission quality such as the power value measured by the transmission quality measuring unit 105 and the data sequence collected by the radio environment monitoring apparatus 7. The resource allocation unit 107 allocates resources to a data sequence to be transmitted on the basis of a resource request from the ground control unit 104 and the information about the transmission quality for each frequency channel held by the transmission quality holding unit 106. Details of resource allocation in the resource allocation unit 107 will be described later.

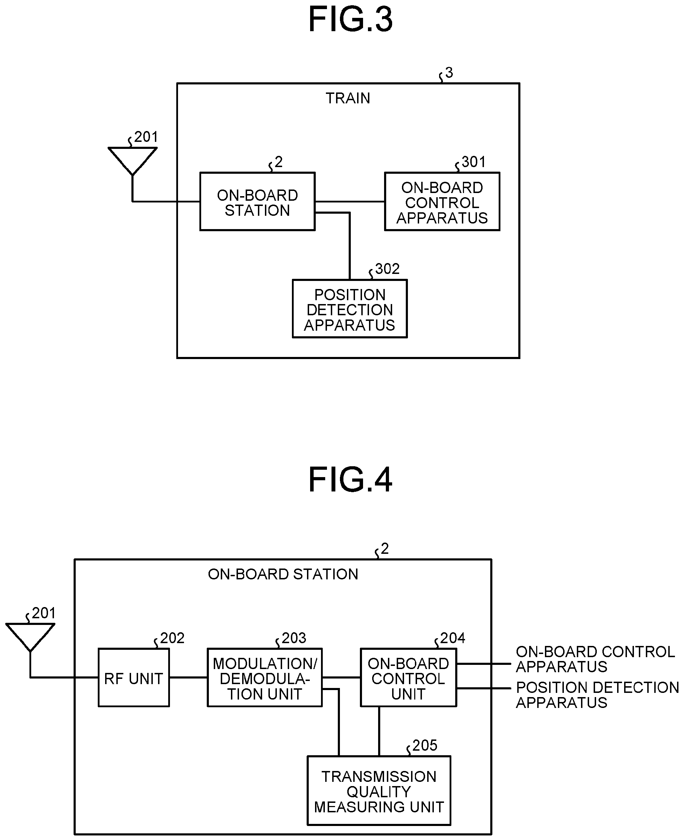

The configuration of the train 3 will be described. FIG. 3 is a block diagram illustrating an example of the configuration of the train 3 according to the example of an implementation of the first embodiment. The train 3 includes the on-board station 2, an on-board control apparatus 301, and a position detection apparatus 302. The on-board control apparatus 301 performs control to, for example, stop or change the speed of the train 3 on the basis of a data sequence received by the on-board station 2. The position detection apparatus 302 detects the position of the train 3 and outputs, to the on-board station 2, position information to be transmitted to the train operation management apparatus 4.

The configuration of the on-board station 2 will be described. FIG. 4 is a block diagram illustrating an example of the configuration of the on-board station 2 according to the example of an implementation of the first embodiment. The on-board station 2 includes the antenna 201, an RF unit 202, a modulation/demodulation unit 203, an on-board control unit 204, and a transmission quality measuring unit 205. The antenna 201, the RF unit 202, the modulation/demodulation unit 203, and the transmission quality measuring unit 205 have similar configurations to the antenna 101, the RF unit 102, the modulation/demodulation unit 103, and the transmission quality measuring unit 105 included in the ground station 1, respectively. The on-board control unit 204 generates a transmit data sequence on the basis of the position information from the position detection apparatus 302 and outputs it to the modulation/demodulation unit 203 at the time of transmission, while, at the time of reception, the unit 204 outputs demodulated data outputted from the modulation/demodulation unit 203 to the on-board control apparatus 301.

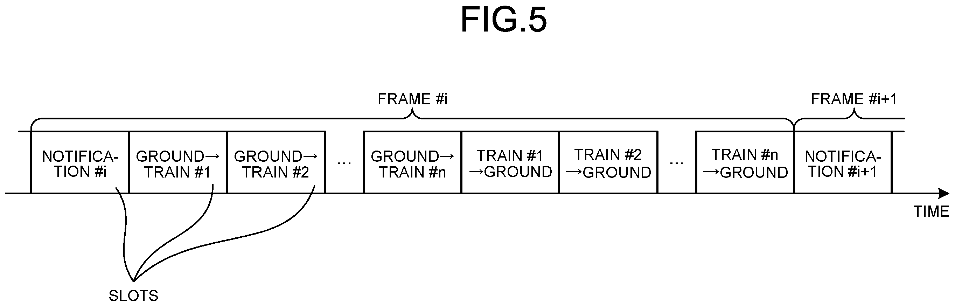

Next, an operation of the train operation management apparatus 4 for managing the operation of the train 3 in the wireless communication system 10 will be described. The on-board station 2 mounted on the train 3 running on the railroad track 6 transmits information to and receives information from the ground stations 1A to 1C installed along the track 6 by radio communication. FIG. 5 is a diagram illustrating an example of the configuration of a frame used when the radio communication is performed between the on-board station 2 and the ground stations 1A to 1C according to the example of an implementation of the first embodiment. In FIG. 5, each frame is formed of slots each having a fixed duration time. A leading slot of the frame is a slot in which notification information is stored. The notification information includes information to be transmitted from the ground station 1 to all the trains 3 in a cell in question. The information to be transmitted includes, for example, information necessary for generating a hopping pattern for a frame, a frame number, a cell number, slot allocation information, and the like. Following the slot in which the notification information is stored in the frame illustrated in FIG. 5, slots for transmitting information such as a stopping limit position from the ground station 1 to the individual trains 3 in the cell are lined up, the slots corresponding in number to the number of the trains 3 that can be accommodated by, that is, connected to, the ground station 1. Following the slots for transmitting the information from the ground station 1 to the trains 3 in the frame illustrated in FIG. 5, slots for transmitting position information of the trains 3 from the trains 3 to the ground station 1 are lined up, the slots corresponding in number to the number of the trains 3 that can be accommodated by, that is, connected to, the ground station 1.

When receiving the notification information in the head of the frame, the on-board station 2 knows a slot and a hopping pattern allocated to the train 3 on which the on-board station 2 is mounted. Here, the frequency channel of the slot for the notification information itself may be generated from hopping pattern information in the notification information of a previous frame, or the hopping pattern information itself may be defined as information for the next frame. The on-board station 2 transmits the position information outputted from the position detection apparatus 302 in a constant cycle, to the ground station 1 in the slot allocated to the train 3 on which the on-board station is mounted. The position detection apparatus 302 detects the position of the train 3 by, for example, a method using Global Positioning System (GPS) or a method of calculating the position using starting point position information that is transmitted from a wayside coil to on-board equipments and a travel distance obtained from a tacho-generator measuring a rotation speed of an axle.

The position information sent from each train 3 is collected in the train operation management apparatus 4 via the ground station 1 and the wired network 5. The train operation management apparatus 4 calculates the stopping limit position for each train 3 on the basis of the position information of each train 3, the stopping limit position being a limit position at which the train can stop safely without colliding with a preceding train. The train operation management apparatus 4 outputs the calculated stopping limit position to the ground station 1 covering the train 3 via the wired network 5.

The ground station 1 transmits the stopping limit position to the train 3 covered by the ground station in the slot allocated to each train 3. In the train 3 that has received the stopping limit position, the on-board control apparatus 301 calculates an operating speed such that the train 3 can stop at the stopping limit position with certainty, and controls the train speed according to the calculated operating speed.

The wireless communication system 10 allows the train operation management apparatus 4 on the ground and the train 3 to exchange the above-mentioned position information and stopping limit position in a constant cycle of about several hundreds of ms, thereby updating the stopping limit position in this cycle and being able to operate the train 3. In a case where the update of the stopping limit position is interrupted due to some abnormality, the train 3 performs speed control and stops. Moreover, when the train 3 moves and approaches the cell area of the ground station 1 nearby, the on-board station 2 performs handover processing for switching the ground station 1 with which communication should be established. The information transmitted between the ground station 1 and the on-board station 2 need not be limited to information related to train control and may be, for example, a video from a surveillance camera, information related to automatic operation, or audio information. FIG. 5 illustrates the example of allocating the slot to the trains 3 that are of "n" cars formation, but when only the train 3 of one car formation is present on a track in the cell, for example, the allocation of the slots may be changed dynamically so that all the slots are allocated to the train 3 of one car formation.

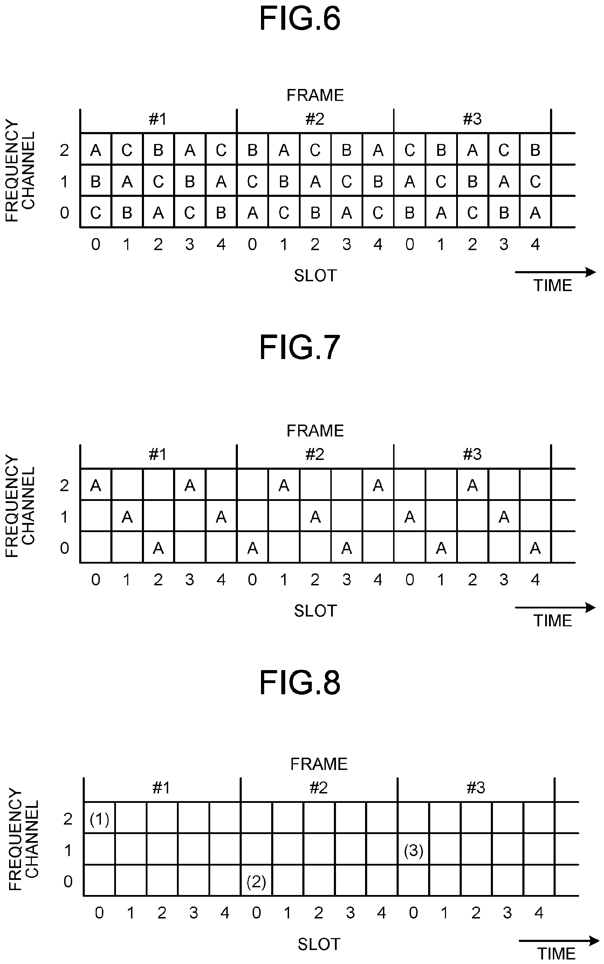

Next, there will be described frequency channel switching control when the frame illustrated in FIG. 5 is wirelessly transmitted between the ground station 1 and the on-board station 2. FIG. 6 is a diagram illustrating an example of a relationship between frequency channels used by each ground station 1 according to the example of an implementation of the first embodiment and slots in each frame. In FIG. 6, the horizontal axis represents time, and the vertical axis represents frequency channels. FIG. 6 illustrates an example with three frequency channels and five slots in a frame. Also, for ease of description, FIG. 6 omits the illustration of the slot for the notification information and the slots for "train → ground" illustrated in FIG. 5, wherein only the slots for "ground → train" are illustrated. In FIG. 6, characters "A", "B", and "C" indicate frequency channels used corresponding to the ground stations 1A, 1B, and 1C, respectively. The wireless communication system 10 applies frequency hopping in the example of an implementation of the present embodiment, and the ground stations 1A to 1C each change the frequency channel used for each slot. The ground stations 1 use different frequency channels in the same slot to prevent interference among the cells of the ground stations 1. Therefore, when a certain ground station 1 uses a frequency channel different from a frequency channel based on a predetermined hopping pattern because the transmission quality of a specific frequency channel is poor, the ground station may interfere with the cell of another one of the ground stations 1 and reduce the transmission quality.

FIG. 7 is a diagram illustrating resources used by the ground station 1A according to the example of an implementation of the first embodiment. The resources used by the ground station 1A illustrated in FIG. 7 are obtained by extracting the resources used by the ground station 1A from the resources used by the ground stations 1A to 1C illustrated in FIG. 6. In the example of an implementation of the present embodiment, the ground station 1A allocates resources to a data sequence to be transmitted, using only the resources indicated by "A" in FIG. 7.

FIG. 8 is a diagram illustrating an example of resource allocation for the ground station 1A according to the example of an implementation of the first embodiment when a data sequence is generated for one slot per frame among the resources used. In the ground station 1A, the resource allocation unit 107 allocates resources in units of frames. FIG. 8 illustrates an example of simple allocation in which the resource allocation unit 107 allocates data sequences (1) to (3) generated in corresponding frames to leading slots of the frames.

In the example of an implementation of the present embodiment, the resource allocation unit 107 changes the resource used depending on the transmission quality based on the radio waves environment. The transmission quality measuring unit 105 in the ground station 1 and the transmission quality measuring unit 205 in the on-board station 2 measure the radio waves environment constantly during operation. The transmission quality measuring unit 105 and the transmission quality measuring unit 205 measure the electric power of a desired signal received as a signal power value, and measure the electric power of radio waves received during a period in which no communication is performed, as an interference power value. The ground station 1 transmits the data measured by the transmission quality measuring unit 105 to the radio environment monitoring apparatus 7 via the wired network 5 and collects the data in the radio environment monitoring apparatus 7. The on-board station 2 transmits the data measured by the transmission quality measuring unit 205 to the radio environment monitoring apparatus 7 via the ground station 1 and the wired network 5 and collects the data in the radio environment monitoring apparatus 7. The radio environment monitoring apparatus 7 averages the measurement data and evaluates the transmission quality. The radio environment monitoring apparatus 7 calculates, for example, a signal-to-interference power ratio for each ground station 1 and for each frequency channel, and performs classification in accordance with the value of the signal-to-interference power ratio.

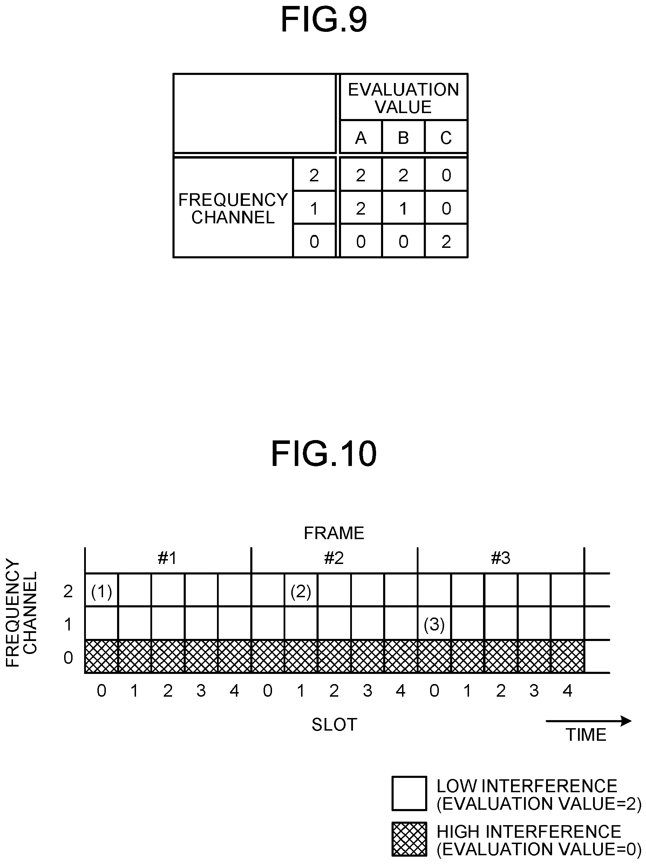

FIG. 9 is a table illustrating an example of evaluation values of the transmission quality classified into classes in the radio environment monitoring apparatus 7 according to the example of an implementation of the first embodiment. FIG. 9 illustrates an example in which the evaluation values of the transmission quality are classified into three levels of 0, 1, and 2 for each ground station and for each frequency channel. In FIG. 9, characters "A", "B", and "C" indicate the ground stations 1A, 1B, and 1C, respectively. In the example of FIG. 9, the evaluation value of "2" indicates the best transmission quality with low interference, the evaluation value of "1" indicates a transmission quality that is second best to that of the evaluation value of "2" with medium interference, and the evaluation value of "0" indicates the poorest transmission quality with high interference. The radio environment monitoring apparatus 7 may evaluate the transmission quality only relying on the level of the interference power instead of the signal-to-interference power ratio. Also, when averaging the measurement data, the radio environment monitoring apparatus 7 may perform the averaging process using the measurement data for every fixed period, or may perform the averaging process using a forgetting factor to increase the influence of the latest measurement data. Additionally, the radio environment monitoring apparatus 7 may more precisely classify the evaluation values into more than three classes, or may evaluate the transmission quality not for each ground station 1 but for each more specific area. Furthermore, the radio environment monitoring apparatus 7 may evaluate the transmission quality separately for the data measured by the ground station 1 and the data measured by the on-board station 2. The radio environment monitoring apparatus 7 distributes the calculated evaluation value of the transmission quality to the ground station 1 in a constant cycle. In the ground station 1, the transmission quality holding unit 106 holds the distributed evaluation value of the transmission quality as information on the transmission quality. The resource allocation unit 107 refers to the evaluation value of the transmission quality held in the transmission quality holding unit 106 when allocating the resources. Note that in the ground station 1, the transmission quality holding unit 106 may hold the data on the signal power and interference power measured by the transmission quality measuring unit 105.

FIG. 10 is a diagram illustrating an example of resource allocation in the resource allocation unit 107 of the ground station 1 according to the example of an implementation of the first embodiment. FIG. 10 illustrates a situation in which a frequency channel 0 has high interference power and poor transmission quality. The resource allocation unit 107 refers to the evaluation values of the transmission quality held in the transmission quality holding unit 106 and grasps the transmission quality of each frequency channel. In the example of FIG. 8, a data sequence (2) in a frame #2 is allocated to a slot 0 and transmitted on the frequency channel 0, but the frequency channel 0 has poor transmission quality in the state of the transmission quality illustrated in FIG. 10. For this reason, unlike the example of FIG. 8, the resource allocation unit 107 allocates the data sequence (2) in the frame #2 to a slot 1 and performs transmission thereof using a frequency channel 2. In this way, the resource allocation unit 107 performs resource allocation of selecting a frequency channel with good transmission quality on the basis of the transmission quality of each frequency channel, and allocating a slot in a frequency hopping pattern corresponding to the selected frequency as a slot used for transmitting a data sequence.

More generally, and according to the invention, when performing a repeated transmission M times for each data sequence of a plurality of data sequences i (i=0 to N-1), the resource allocation unit 107 performs resource allocation to minimize a transmission error rate of the data sequence whose expected transmission error rate is the maximum. That is, the resource allocation unit 107 performs resource allocation such that the following expression (1) has a minimum

value.
[Formula 1]

$$\max \left( \prod_{j=0}^{M-1} P \left( C_{i,j} \right) \right), \qquad i = 0 \quad to \quad N - 1 \quad \cdots \quad (1)$$

In the expression (1), $C_{i,j}$ represents a frequency channel of a slot used for an i-th data sequence in a j-th repeated transmission. $P(C_{i,j})$ represents a transmission error rate of the frequency channel $C_{i,j}$. "max ()" is an operator for extracting the maximum value within i=0 to N-1. FIG. 10 illustrates an example in a case of N=1 and M=1.

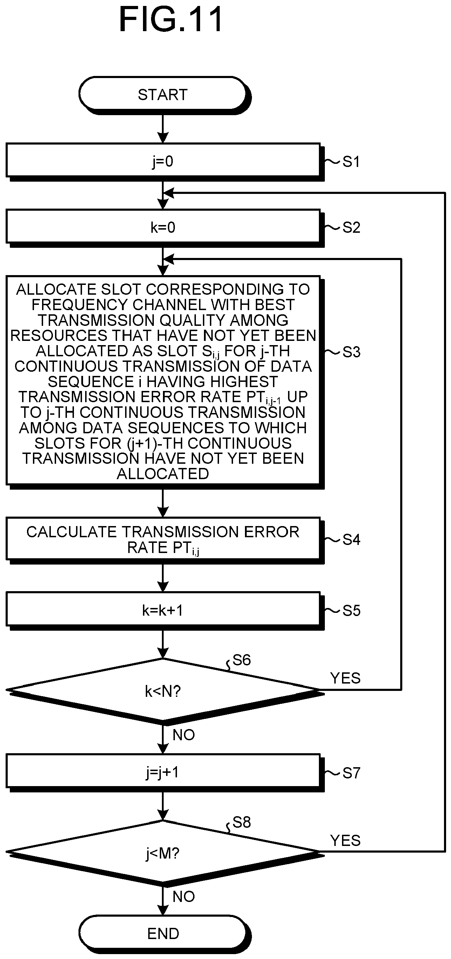

Here, when the number of slots, the number of frequency channels, the number of data sequences N, and/or the number of repeated transmissions M in one frame increases, the resource allocation unit 107 has an increased number of combinations of resource allocation and finds it difficult to search for resource allocation for minimizing the expression (1). FIG. 11 illustrates an example of an algorithm that minimizes the expression (1) relatively easily when M≤2. FIG. 11 is a flowchart illustrating an example of a resource allocation algorithm in the resource allocation unit 107 according to the example of an implementation of the first embodiment.

Upon starting the resource allocation, the resource allocation unit 107 initializes a parameter j indicating the number of repeated transmissions to j=0 (step S1), and initializes a parameter k indicating a sequence corresponding to the number of data sequences to k=0 (step S2). The resource allocation unit 107 allocates a slot corresponding to a frequency channel with the best transmission quality among resources that have not yet been allocated as a slot Si,j for a j-th repeated transmission of a data sequence i having the highest transmission error rate $PT_{i,j-1}$ up to the j-th repeated transmission among data sequences for which a (j+1)-th repeated transmission has not yet been subjected to allocation (step S3). The resource allocation unit 107 calculates a transmission error rate $PT_{i,j}$ of the data sequence i up to a (j+1)-th repeated transmission (step S4). Specifically, when $C_{i,j}$ represents the frequency channel corresponding to the slot Si,j and $P(C_{i,j})$ represents the transmission error rate corresponding to the transmission quality of $C_{i,j}$, the resource allocation unit 107 calculates the transmission error rate $PT_{i,j}$ according to expression (2).
[Formula 2]

$$PT_{i,j} = \prod_{l=0}^{j} P \left( C_{i,l} \right), \qquad i = 0 \quad to \quad N - 1 \quad \cdots \quad (2)$$

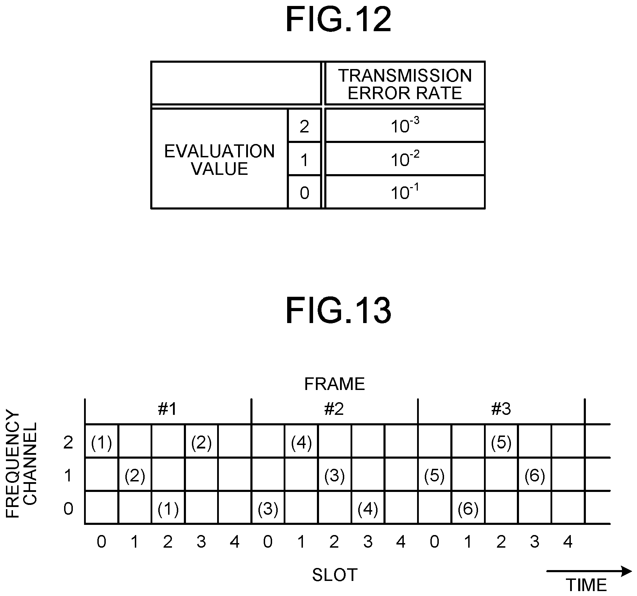

The resource allocation unit 107 may, for example, hold in advance a table of transmission error rates corresponding to the evaluation values of the transmission quality as illustrated in FIG. 12, that is, a table of transmission error rates associated with the transmission quality, and find the transmission error rate $PT_{i,j}$ by searching the table on the basis of the evaluation value of the transmission quality for each frequency channel. FIG. 12 is a figure illustrating an example of the table that is held by the resource allocation unit 107 according to the example of an implementation of the first embodiment and represents the relationship between the evaluation values of the transmission quality and the transmission error rates. The ground station 1 may store and use statistical information on an actual transmission error for each frequency channel, not calculate the evaluation value of the transmission quality from the measured radio waves environment.

After calculating the transmission error rate $PT_{i,j}$, the resource allocation unit 107 increments by one the value of the parameter k that indicates the sequence corresponding to the number of data sequences (step S5). If the parameter k is smaller than the number of data sequences N (Yes in step S6), the resource allocation unit 107 returns to the processing of step S3. If the parameter k is larger than or equal to the number of data sequences N (No in step S6), the resource allocation unit 107 increments by one the value of the parameter j indicating the number of repeated transmissions (step S7). If the parameter j is smaller than the number of repeated transmissions M (Yes in step S8), the resource allocation unit 107 returns to the processing of step S2. If the parameter j is larger than or equal to the number of repeated transmissions M (No in step S8), the resource allocation unit 107 ends the processing.

The resource allocation unit 107 performs resource allocation in the order of the first repeated transmission (j=0) and the second repeated transmission (j=1) in the loop for repeated transmission from step S2 to step S8, and performs resource allocation on each data sequence i in the loop of step S3 to step S6.

FIG. 13 is a diagram illustrating a first example of resource allocation in a case where the resource allocation unit 107 according to the example of an implementation of the first embodiment performs two repeated transmissions on each sequence with two data sequences per frame. In the example illustrated in FIG. 13, the frequency channels have their equal transmission qualities. In this case, the resource allocation unit 107 can allocate data sequences (1) to (6) sequentially from the leading slot in each frame.

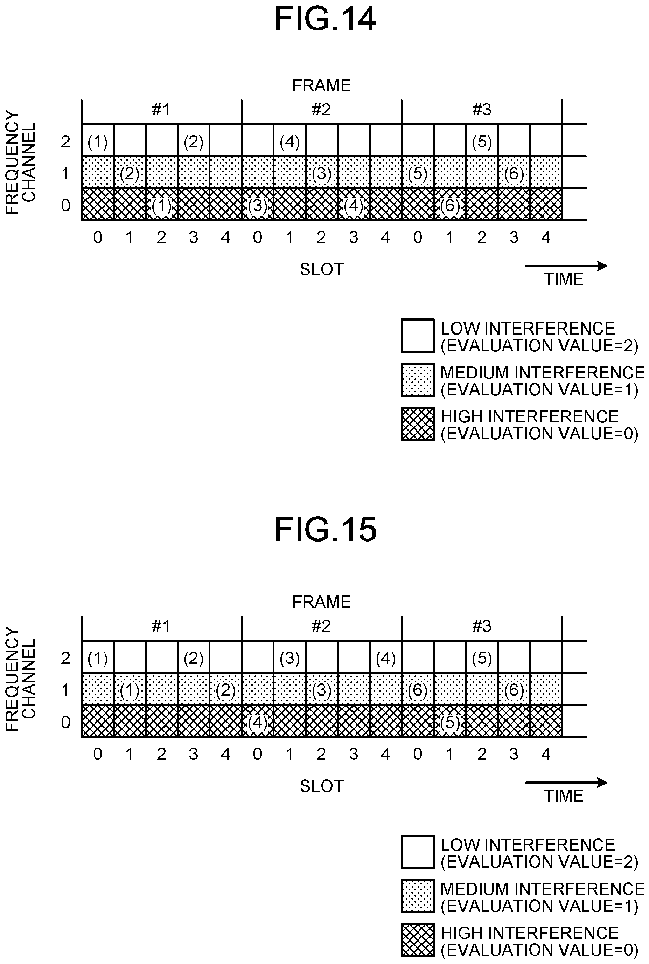

Now, there will be described a case where a state of the transmission quality of each frequency channel illustrated in FIG. 13 has changed. FIG. 14 is a diagram illustrating a state in which the transmission quality of the frequency channel 0 has deteriorated from the states of the transmission quality of the frequency channels illustrated in FIG. 13. In the state illustrated in FIG. 14, the resource allocation unit 107 uses the above-mentioned expression (2) and the content of FIG. 12 to calculate the transmission error rates of the data sequences, thereby resulting in $10^{-4}$ for the data sequence (1), $10^{-5}$ for the data sequence (2), $10^{-3}$ for the data sequence (3), $10^{-4}$ for data sequence (4), $10^{-5}$ for the data sequence (5), and $10^{-3}$ for the data sequence (6). According to the state of the transmission quality of each frequency channel and the example of resource allocation of the resource allocation unit 107 illustrated in FIG. 14, the data sequences (3) and (6) out of the data sequences (1) to (6) have a bad transmission error rate of $10^{-3}$.

FIG. 15 illustrates an example of a case where the resource allocation unit 107 performs resource allocation again according to the procedure illustrated in FIG. 11 from the state illustrated in FIG. 14. FIG. 15 is a diagram illustrating a second example of resource allocation in a case where the resource allocation unit 107 according to the example of an implementation of the first embodiment performs two repeated transmissions on each sequence with two data sequences per frame. When the transmission quality of the frequency channel 0 has deteriorated from the states of the transmission quality of the frequency channels illustrated in FIG. 13, the resource allocation unit 107 performs resource allocation again according to the procedure illustrated in FIG. 11. In the state illustrated in FIG. 15, the resource allocation unit 107 uses the above-mentioned expression (2) and the content of FIG. 12 to calculate the transmission error rates of the data sequences, thereby resulting in $10^{-5}$ for the data sequence (1), $10^{-5}$ for the data sequence (2), $10^{-5}$ for the data sequence (3), $10^{-4}$ for data sequence (4), $10^{-4}$ for the data sequence (5), and $10^{-4}$ for the data sequence (6) . According to the state of the transmission quality of each frequency channel and the example of resource allocation by the resource allocation unit 107 illustrated in FIG. 15, the data sequences (4) to (6) out of the data sequences (1) to (6) have a bad transmission error rate of $10^{-4}$. In the case of FIG. 15, compared to the case of FIG. 14, the worst transmission error rate has improved from $10^{-3}$ to $10^{-4}$.

As described above, when the used frequency channels include ones with different evaluation values of transmission quality, the resource allocation unit 107 performs resource allocation according to the procedure illustrated in FIG. 11 thereby making it possible to improve the transmission error rate of the data sequence having the worst transmission error rate. Note that in a case where the resource allocation unit 107 performs resource allocation according to the procedure illustrated in FIG. 11, the transmission error rate is not necessarily minimized with the number of repeated transmissions of $M \geq 3$, but such a case has an effect of reducing the transmission error rate as compared to a conventional case.

The example of an implementation of the present embodiment has illustrated the case where the ground station 1 performs resource allocation, but the present invention is not limited to this manner. For example, for transmission from the on-board station 2 to the ground station 1, the on-board station 2 requests a required amount of resources to the ground station 1, and the ground station 1 distributes resources in response to the request from the on-board station 2. The on-board station 2 may then allocate slots according to the data sequence and repeated transmission on the basis of the resources distributed from the ground station 1. In this case, the on-board station 2 is configured to include a component or components corresponding to the transmission quality holding unit 106 and the resource allocation unit 107 of the ground station 1. As a result, the load on the ground station 1 can be dispersed, and the on-board station 2 need only pass the information with the required amount of resources to the ground station 1 without needing to pass the information on the number of data sequences and the number of repeated transmissions, whereby the communication between the apparatuses can be simplified in the wireless communication system 10.

When allocating resources to a plurality of the trains 3 connected to the ground station 1 as well, the ground station 1 can preferentially allocate slots with good transmission quality using a similar algorithm.

According to the example of an implementation of the present embodiment described above, the resource allocation unit 107 in the ground station 1 performs resource allocation to reduce the estimated transmission error rate by preferentially allocating resources with good transmission quality without changing the predetermined frequency hopping pattern. As a result, the wireless communication system 10 can establish high-quality and stable wireless communication without the signal of the ground station 1 interfering with the cell of another one of the ground stations 1.

Second Implementation . In the example of an implementation of the first embodiment, the resource allocation unit 107 can adapt to a change in the transmission quality, that is, the radio waves environment of each frequency channel by reallocating the resources. However, the transmission error rate may temporarily deteriorate during the period from the change in the radio waves environment to the reallocation of resources of the resource allocation unit 107. In an example of an implementation of the second embodiment, the resource allocation unit 107 performs resource allocation for further strengthening interference immunity even when the radio waves environment changes from the time when the transmission quality is measured. Differences from the example of an implementation of the first embodiment will be described.

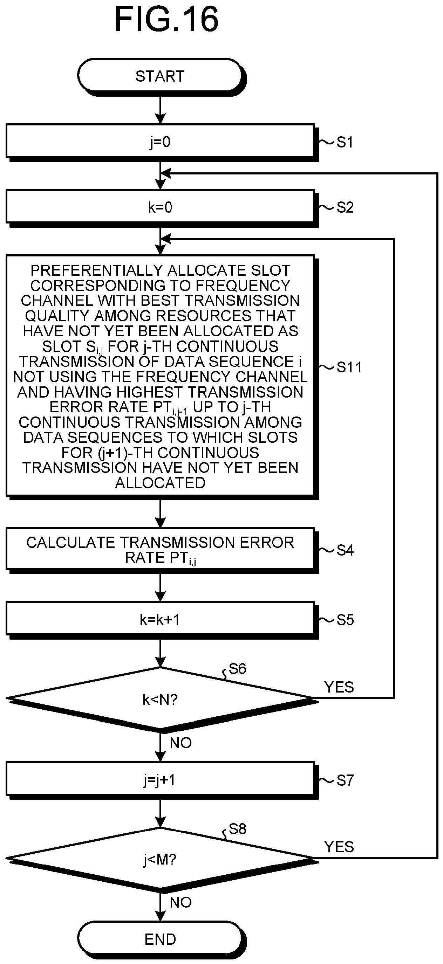

In the example of an implementation of the second embodiment, the configurations of the wireless communication system 10, the ground station 1, the train 3, and the on-board station 2 are similar to those of the example of an implementation of the first embodiment. In the example of an implementation of the second embodiment, the resource allocation unit 107 employs a different resource allocation method. FIG. 16 is a flowchart illustrating an example of a resource allocation algorithm in the resource allocation unit 107 according to the example of an implementation of the second embodiment. The flowchart of the example of an implementation of the second embodiment illustrated in FIG. 16 has a difference in a process of step S3 of the flowchart in the example of an implementation of the first embodiment illustrated in FIG. 11. In the example of an implementation of the second embodiment, the resource allocation unit 107 preferentially allocates a slot corresponding to a frequency channel with the best transmission quality among resources that have not yet been allocated, as a slot Si,j for a j-th repeated transmission, to a data sequence i not using the frequency channel and having the highest transmission error rate $PT_{i,j-1}$ up to the j-th repeated transmission among data sequences for which a (j+1)-th repeated transmission has not yet been subjected to allocation (step S11).

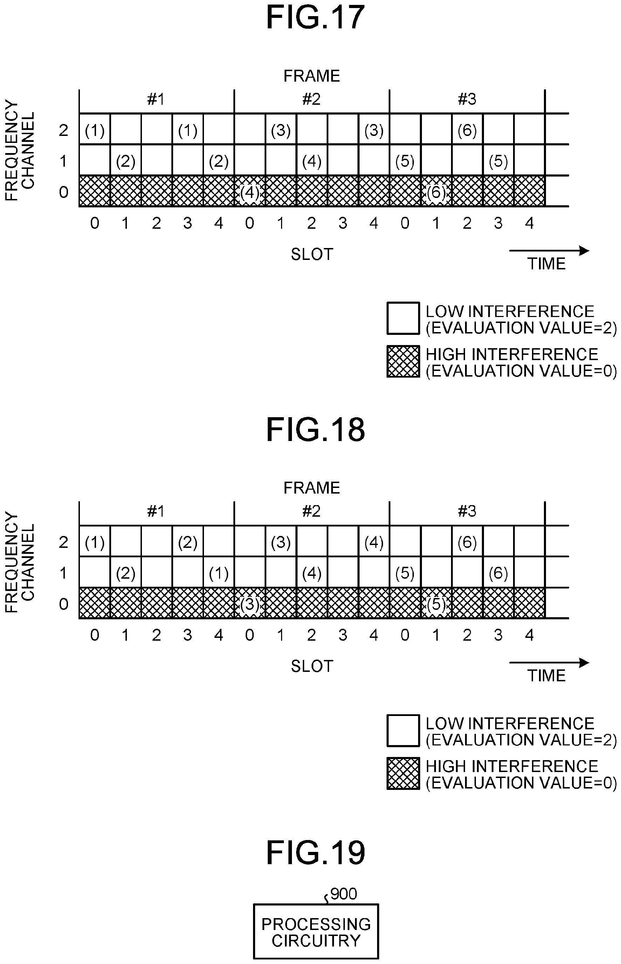

FIG. 17 is a diagram illustrating an example of resource allocation in a case where the resource allocation unit 107 performs two repeated transmissions on each sequence with two data sequences per frame in accordance with the resource allocation algorithm according to the first embodiment. As in the case of the example of an implementation of the first embodiment, it is assumed that the number of data sequences N is set to be two per frame, and the number of repeated transmissions M for each data sequence is set to be two. Also, the transmission quality is set under the condition that the frequency channel 0 has the evaluation value of 0 with high interference, and the frequency channels 1 and 2 each have the evaluation value of 2 with low interference. Since the frequency channels 1 and 2 have good transmission quality in the example illustrated in FIG. 17, the resource allocation unit 107 preferentially allocates slots in which these two frequency channels are used.

FIG. 18 is a diagram illustrating an example of resource allocation in a case where the resource allocation unit 107 according to the example of an implementation of the second embodiment performs twc repeated transmissions on each sequence with the two data sequences per frame. For example, in a frame #1, the resource allocation unit 107 allocates a slot 0 with good transmission quality to a data sequence (1) and a slot 1 to a data sequence (2) in a first repeated transmission (j=0). In a second repeated transmission (j=1), the resource allocation unit 107 allocates a slot 3 to the data sequence (2) according to step S11 of the flowchart illustrated in FIG. 16 because the data sequences (1) and (2) have the same transmission error rate up to the first repeated transmission, and in the first repeated transmission, the slot 0 in the same frequency channel as that of the slot 3 is allocated to the data sequence (1). Then, in the second repeated transmission, the resource allocation unit 107 allocates a slot 4 to the data sequence (1) to which a slot for the second repeated transmission has not yet been allocated. As described above, when performing repeated transmission of data sequences, the resource allocation unit 107 preferentially allocates slots in different frequency channels to each data sequence as slots used at the time of transmissions for performing repeated transmissions of two or more data sequences.

In a frame #2, the resource allocation unit 107 performs similar processing to allocate resources in such a manner that a data sequence (3) allocated to the frequency channel 2 in a slot 4 and a data sequence (4) allocated to the frequency channel 0 in a slot 0 are exchanged. Also in a frame #3, the resource allocation unit 107 performs the similar processing to allocate resources in such a manner that a data sequence (5) allocated to the frequency channel 1 in a slot 3 and a data sequence (6) allocated to the frequency channel 0 in a slot 1 are exchanged. For example, there is assumed a case where the transmission quality of the frequency channel 1 deteriorates through change from that in the time of measurement thereof. In the example of FIG. 17, in the frame #1, the ground station 1 transmits the data sequence of the data sequence (2) by using the frequency channel 1 with poor transmission quality in both of the two repeated transmissions. On the other hand, in the example of FIG. 18, the ground station 1 can transmit the data sequence of the data sequence (2) by using the frequency channel 2 with good transmission quality in one of the two repeated transmissions. In this way, the second embodiment can improve the transmission error rate as compared to the first embodiment immediately after the transmission quality changes.

According to the example of an implementation of the present embodiment described above, when performing repeated transmissions of data sequences, the resource allocation unit 107 in the ground station 1 allocates a different frequency channel between the repeated transmissions from among frequency channels with good transmission quality. As a result, the wireless communication system 10 can establish wireless communication with higher quality and stability by virtue of the effect of frequency diversity as compared to the example of an implementation of the first embodiment when the radio waves environment changes.

Here, the hardware configurations of the ground station 1 and the on-board station 2 described in the first and second embodiments will be described. The antenna 101 of the ground station 1 and the antenna 201 of the on-board station 2 are antenna elements. The RF unit 102 of the ground station 1 and the RF unit 202 of the on-board station 2 each include an analog circuit that performs frequency conversion or the like, an analog-to-digital converter, a digital-to-analog converter, and the like. In the ground station 1, the modulation/demodulation unit 103, the ground control unit 104, the transmission quality measuring unit 105, the transmission quality holding unit 106, and the resource allocation unit 107 are implemented by processing circuitry. In the on-board station 2, the modulation/demodulation unit 203, the on-board control unit 204, and the transmission quality measuring unit 205 are implemented by processing circuitry. The processing circuitry may be dedicated hardware or a control circuit including a memory and a processor executing programs stored in the memory. The processor may be a central processing unit (CPU), a central processor, a processing unit, an arithmetic unit, a microprocessor, a microcomputer, a digital signal processor (DSP), or the like. The memory corresponds to, for example, a nonvolatile or volatile semiconductor memory such as a random access memory (RAM), a read only memory (ROM), a flash memory, an erasable programmable read only memory (EPROM), or an electrically erasable programmable read only memory (EEPROM (registered trademark)), a magnetic disk, a flexible disk, an optical disk, a compact disc, a mini disc, or a digital versatile disk (DVD).

FIG. 19 is a diagram illustrating an example of a case where the processing circuitry of the ground station 1 or the on-board station 2 includes dedicated hardware. When implemented by dedicated hardware, the processing circuitry corresponds to processing circuitry 900 illustrated in FIG. 19. The processing circuitry 900 is, for example, a single circuit, a complex circuit, a programmed processor, a parallel-programmed processor, an application specific integrated circuit (ASIC), a field programmable gate array (FPGA), or a combination of those.

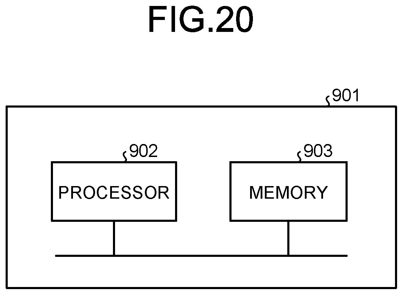

FIG. 20 is a diagram illustrating an example of a case where the processing circuitry of the ground station 1 or the on-board station 2 includes a control circuit with a processor. When the processing circuitry includes a control circuit with a processor, the control circuit corresponds to a control circuit 901 illustrated in FIG. 20, for example. The control circuit 901 includes a processor 902 and a memory 903. The processing circuitry included in the ground station 1 or the on-board station 2 is implemented by the processor 902 reading and executing a program corresponding to each component stored in the memory 903. The memory 903 is also used as a temporary memory for each processing executed by the processor 902.

Reference Signs List

1, 1A to 1C ground station; 2 on-board station; 3 train; 4 train operation management apparatus; 5 wired network; 6 railroad track; 7 radio environment monitoring apparatus; 10 wireless communication system; 101, 201 antenna; 102, 202 RF unit; 103, 203 modulation/demodulation unit; 104 ground control unit; 105, 205 transmission quality measuring unit; 106 transmission quality holding unit; 107 resource allocation unit; 204 on-board control unit; 301 on-board control apparatus; 302 position detection apparatus.

**Claims**

1.  A wireless communication apparatus (1) comprising:

    a resource allocation unit (107) to perform resource allocation of selecting a frequency channel with best transmission quality from a plurality of frequency channels on the basis of transmission quality of each frequency channel of the plurality of frequency channels, and allocating a time slot in a frequency hopping pattern corresponding to the selected frequency channel as a time slot to be used for transmission of a data sequence; and
    a control station (104) to control transmission of the data sequence using the time slot allocated by the resource allocation unit (107) and the frequency channel,
    **characterized in that** when performing a repeated transmission on a plurality of data sequences, the resource allocation unit (107) is configured to perform the resource allocation such that the expression

    $$\max \left( \prod_{j=0}^{M-1} P\left(C_{i,j}\right) \right),$$

    i = 0 to N - 1 has a minimum value, where N denotes the number of data sequences, M denotes the number of repeated transmissions in one frame, $C_{i,j}$ represents a frequency channel of a slot used for an i-th data sequence in a j-th repeated transmission, $P(C_{i,j})$ represents a transmission error rate of the frequency channel $C_{i,j}$, and max () is an operator for extracting the maximum value within i=0 to N-1.

2.  The wireless communication apparatus (1) according to claim 1, wherein
    the resource allocation unit (107) allocates, to each data sequence, a time slot of a different frequency channel as a time slot used at the time of each transmission for performing the repeated transmission of the plurality of data sequences.

3.  A wireless communication system (100) comprising
    a plurality of wireless communication apparatuses corresponding to the wireless communication apparatus (1) according to claim 1 or 2.

4. A wireless communication method comprising:

a first step of, by a resource allocation unit (107), performing resource allocation of selecting a frequency channel with best transmission quality from a plurality of frequency channels and allocating a time slot in a frequency hopping pattern corresponding to the selected frequency channel as a time slot to be used for transmission of a data sequence; and
a second step of, by a control station (104), controlling transmission of the data sequence using the time slot allocated in the first step and the frequency channel,
**characterized in that** when performing a repeated transmission on a plurality of data sequences, the resource allocation is performed such that the expression

$$\max \left( \prod_{j=0}^{M-1} P \left( C_{i,j} \right) \right),$$

i = 0 to N - 1 has a minimum value, where N denotes the number of data sequences, M denotes the number of repeated transmissions in one frame, $C_{i,j}$ represents a frequency channel of a slot used for an i-th data sequence in a j-th repeated transmission, $P(C_{i,j})$ represents a transmission error rate of the frequency channel $C_{i,j}$, and max() is an operator for extracting the maximum value within i=0 to N-1.

5. A control circuit configured to control a wireless communication apparatus (1), the control circuit causing the wireless communication apparatus (1) to:

perform resource allocation of selecting a frequency channel with best transmission quality from a plurality of frequency channels on the basis of transmission quality of each frequency channel of the plurality of frequency channels and allocating a time slot in a frequency hopping pattern corresponding to the selected frequency channel as a time slot to be used for transmission of a data sequence; and
control transmission of the data sequence using the time slot allocated in the resource allocation and the frequency channel,
**characterized in that** when performing a repeated transmission on a plurality of data sequences, the resource allocation is performed such that the expression

$$\max \left( \prod_{j=0}^{M-1} P \left( C_{i,j} \right) \right),$$

i = 0 to N - 1 has a minimum value, where N denotes the number of data sequences, M denotes the number of repeated transmissions in one frame, $C_{i,j}$ represents a frequency channel of a slot used for an i-th data sequence in a j-th repeated transmission, $P(C_{i,j})$ represents a transmission error rate of the frequency channel $C_{i,j}$, and max() is an operator for extracting the maximum value within i=0 to N-1.

6. A storage medium in which a program for controlling a wireless communication apparatus (1) is stored, the program being configured to cause the wireless communication apparatus (1) to:

perform resource allocation of selecting a frequency channel with best transmission quality from a plurality of frequency channels on the basis of transmission quality of each frequency channel of the plurality of frequency channels and allocating a time slot in a frequency hopping pattern corresponding to the selected frequency channel as a time slot to be used for transmission of a data sequence; and
control transmission of the data sequence using the time slot allocated in the resource allocation and the frequency channel,
**characterized in that** when performing a repeated transmission on a plurality of data sequences, the resource allocation is performed such that the expression

$$\max \left( \prod_{j=0}^{M-1} P \left( C_{i,j} \right) \right),$$

i = 0 to N - 1 has a minimum value, where N denotes the number of data sequences, M denotes the number of repeated transmissions in one frame, $C_{i,j}$ represents a frequency channel of a slot used for an i-th data sequence in a j-th repeated transmission, $P(C_{i,j})$ represents a transmission error rate of the frequency channel $C_{i,j}$, and max() is an operator for extracting the maximum value within i=0 to N-1.

**Patentansprüche**

1. Drahtlos-Kommunikationsvorrichtung (1), umfassend:

eine Ressourcenzuweisungseinheit (107) zum Durchführen von Ressourcenzuweisung des Auswählens eines Frequenzkanals mit bester Übertragungsqualität aus einer Vielzahl von Frequenzkanälen auf der Grundlage einer Übertragungsqualität jedes Frequenzkanals der Vielzahl von Frequenzkanälen und des Zuweisens eines Zeitfensters in einem Frequenzsprungmuster, das dem ausgewählten Frequenzkanal entspricht, als ein Zeitfenster, das für die Übertragung einer Datensequenz zu verwenden ist; und
eine Steuerungsstation (104) zum Steuern von Übertragung der Datensequenz unter Verwendung des von der Ressourcenzuweisungseinheit (107) zugewiesenen Zeitfensters und des Frequenzkanals,
**dadurch gekennzeichnet, dass** die Ressourcenzuweisungseinheit (107) eingerichtet ist, bei Durchführung einer wiederholten Übertragung an einer Vielzahl von Datensequenzen die Ressourcenzuweisung so durchzuführen, dass der Ausdruck

$$\max\left(\prod_{j=0}^{M-1} P\left(C_{i,j}\right)\right),$$

$i$ = 0 *to* N - 1 einen Minimalwert aufweist, wo N die Anzahl der Datensequenzen bezeichnet, M die Anzahl wiederholter Übertragungen in einem Rahmen bezeichnet, $C_{i,j}$ einen Frequenzkanal eines Fensters darstellt, der für eine i-te Datensequenz in einer j-ten wiederholten Übertragung verwendet wird, $P(C_{i,j})$ eine Übertragungsfehlerrate des Frequenzkanals $C_{i,j}$ darstellt und max () ein Operator zum Extrahieren des Maximalwertes innerhalb von i=0 bis N-1 ist.

2. Drahtlos-Kommunikationsvorrichtung (1) nach Anspruch 1, wobei
die Ressourcenzuweisungseinheit (107) jeder Datensequenz ein Zeitfenster eines anderen Frequenzkanals als ein Zeitfenster zuweist, der zum Zeitpunkt jeder Übertragung zum Durchführen der wiederholten Übertragung der Vielzahl von Datensequenzen verwendet wird.

3. Drahtlos-Kommunikationssystem (100), umfassend eine Vielzahl von Drahtlos-Kommunikationsvorrichtungen, die der Drahtlos-Kommunikationsvorrichtung (1) nach Anspruch 1 oder 2 entsprechen.

4. Drahtlos-Kommunikationsverfahren, umfassend:

einen ersten Schritt des Durchführens, durch eine Ressourcenzuweisungseinheit (107), einer Ressourcenzuweisung des Auswählens eines Frequenzkanals mit bester Übertragungsqualität aus einer Vielzahl von Frequenzkanälen und des Zuweisens eines Zeitfensters in einem Frequenzsprungmuster, das dem ausgewählten Frequenzkanal entspricht, als ein Zeitfenster, das für die Übertragung einer Datensequenz zu verwenden ist; und
einen zweiten Schritt des Steuerns, durch die Steuerungsstation (104), einer Übertragung der Datensequenz unter Verwendung des im ersten Schritt zugewiesenen Zeitfensters und des Frequenzkanals,
**dadurch gekennzeichnet, dass** bei Durchführung einer wiederholten Übertragung an einer Vielzahl von Datensequenzen die Ressourcenzuweisung so durchgeführt wird, dass der Ausdruck

$$\max\left(\prod_{j=0}^{M-1} P\left(C_{i,j}\right)\right),$$

i = 0 *to* N - 1 einen Minimalwert aufweist, wo N die Anzahl der Datensequenzen bezeichnet, M die Anzahl wiederholter Übertragungen in einem Rahmen bezeichnet, $C_{i,j}$ einen Frequenzkanal eines Fensters darstellt, der für eine i-te Datensequenz in einer j-ten wiederholten Übertragung verwendet wird, $P(C_{i,j})$ eine Übertragungsfehlerrate des Frequenzkanals $C_{i,j}$ darstellt und max () ein Operator zum Extrahieren des Maximalwertes innerhalb von i=0 bis N-1 ist.

5. Steuerschaltung, die eingerichtet ist, eine Drahtlos-Kommunikationsvorrichtung (1) zu steuern, wobei die Steuerschaltung die Drahtlos-Kommunikationsvorrichtung (1) veranlasst zum:

Durchführen von Ressourcenzuweisung des Auswählens eines Frequenzkanals mit bester Übertragungsqualität aus einer Vielzahl von Frequenzkanälen auf der Grundlage einer Übertragungsqualität jedes Frequenzkanals der Vielzahl von Frequenzkanälen und des Zuweisens eines Zeitfensters in einem Frequenzsprungmuster, das dem ausgewählten Frequenzkanal entspricht, als ein Zeitfenster, das für die Übertragung einer Datensequenz zu verwenden ist; und

Steuern von Übertragung der Datensequenz unter Verwendung des in der Ressourcenzuweisung zugewiesenen Zeitfensters und des Frequenzkanals,

**dadurch gekennzeichnet, dass** bei Durchführung einer wiederholten Übertragung an einer Vielzahl von Datensequenzen die Ressourcenzuweisung so durchgeführt wird, dass der Ausdruck

$$\max\left(\prod_{j=0}^{M-1} P\left(C_{i,j}\right)\right),$$

$i$ = 0 *to N* - 1 einen Minimalwert aufweist, wo N die Anzahl der Datensequenzen bezeichnet, M die Anzahl wiederholter Übertragungen in einem Rahmen bezeichnet, $C_{i,j}$ einen Frequenzkanal eines Fensters darstellt, der für eine i-te Datensequenz in einer j-ten wiederholten Übertragung verwendet wird, $P(C_{i,j})$ eine Übertragungsfehlerrate des Frequenzkanals $C_{i,j}$ darstellt und max () ein Operator zum Extrahieren des Maximalwertes innerhalb von i=0 bis N-1 ist.

**6.** Speichermedium, in dem ein Programm zur Steuerung einer Drahtlos-Kommunikationsvorrichtung (1) gespeichert ist, wobei das Programm eingerichtet ist, die Drahtlos-Kommunikationsvorrichtung (1) zu veranlassen zum:

Durchführen von Ressourcenzuweisung des Auswählens eines Frequenzkanals mit bester Übertragungsqualität aus einer Vielzahl von Frequenzkanälen auf der Grundlage einer Übertragungsqualität jedes Frequenzkanals der Vielzahl von Frequenzkanälen und des Zuweisens eines Zeitfensters in einem Frequenzsprungmuster, das dem ausgewählten Frequenzkanal entspricht, als ein Zeitfenster, das für die Übertragung einer Datensequenz zu verwenden ist; und

Steuern von Übertragung der Datensequenz unter Verwendung des in der Ressourcenzuweisung zugewiesenen Zeitfensters und des Frequenzkanals,

**dadurch gekennzeichnet, dass** bei Durchführung einer wiederholten Übertragung an einer Vielzahl von Datensequenzen die Ressourcenzuweisung so durchgeführt wird, dass der Ausdruck

$$\max\left(\prod_{j=0}^{M-1} P\left(C_{i,j}\right)\right),$$

i = 0 to N - 1 einen Minimalwert aufweist, wo N die Anzahl der Datensequenzen bezeichnet, M die Anzahl wiederholter Übertragungen in einem Rahmen bezeichnet, $C_{i,j}$ einen Frequenzkanal eines Fensters darstellt, der für eine i-te Datensequenz in einer j-ten wiederholten Übertragung verwendet wird, $P(C_{i,j})$ eine Übertragungsfehlerrate des Frequenzkanals $C_{i,j}$ darstellt und max ( ) ein Operator zum Extrahieren des Maximalwertes innerhalb von i=0 bis N-1 ist.

## Revendications

**1.** Appareil de communication sans fil (1) comprenant :

une unité d'attribution de ressources (107) pour réaliser une attribution de ressources consistant à sélectionner un canal de fréquence ayant la meilleure qualité de transmission parmi une pluralité de canaux de fréquence sur la base de la qualité de transmission de chaque canal de fréquence de la pluralité de canaux de fréquence, et à attribuer un intervalle de temps dans un motif de saut de fréquence correspondant au canal de fréquence sélectionné comme un intervalle de temps à utiliser pour la transmission d'une séquence de données ; et

une station de commande (104) pour commander la transmission de la séquence de données en utilisant l'intervalle de temps attribué par l'unité d'attribution de ressources (107) et le canal de fréquence, **caractérisé en ce que** lors de la réalisation d'une transmission répétée sur une pluralité de séquences de données, l'unité d'attribution de ressources (107) est configurée pour réaliser l'attribution de ressources de telle sorte que l'expression

$$\max\left(\prod_{j=0}^{M-1} P\left(C_{i,j}\right)\right),$$

$i$ = 0 to N - 1 a une valeur minimale, où N désigne le nombre de séquences de données, M désigne le nombre de transmissions répétées dans une trame, $C_{i,j}$ représente un canal de fréquence d'un intervalle utilisé pour une i-ème séquence de données dans une j-ème transmission répétée, $P(C_{i,j})$ représente un taux d'erreur de transmission du canal de fréquence $C_{i,j}$, et max () est un opérateur pour extraire la valeur maximale entre i=0 et N-1.

2. Appareil de communication sans fil (1) selon la revendication 1, dans lequel
l'unité d'attribution de ressources (107) attribue, à chaque séquence de données, un intervalle temporel d'un canal de fréquence différent en tant qu'un intervalle temporel utilisé au moment de chaque transmission pour réaliser la transmission répétée de la pluralité de séquences de données.

3. Système de communication sans fil (100) comprenant
une pluralité d'appareils de communication sans fil correspondant à l'appareil de communication sans fil (1) selon la revendication 1 ou 2.

4. Procédé de communication sans fil comprenant :

une première étape consistant, par une unité d'attribution de ressources (107), à réaliser une attribution de ressources consistant à sélectionner un canal de fréquence avec la meilleure qualité de transmission parmi une pluralité de canaux de fréquence et à attribuer un intervalle temporel dans un motif de saut de fréquence correspondant au canal de fréquence sélectionné comme un intervalle temporel à utiliser pour la transmission d'une séquence de données ; et
une deuxième étape consistant, par une station de commande (104), à commander la transmission de la séquence de données en utilisant l'intervalle de temps attribué dans la première étape et le canal de fréquence, **caractérisé en ce que**, lors de la réalisation d'une transmission répétée sur une pluralité de séquences de données, l'attribution de ressources est réalisée de telle sorte que l'expression

$$\max \left( \prod_{j=0}^{M-1} P\left( C_{i,j} \right) \right),$$

$i = 0$ *to* $N - 1$ a une valeur minimale, où N désigne le nombre de séquences de données, M désigne le nombre de transmissions répétées dans une trame, $C_{i,j}$ représente un canal de fréquence d'un intervalle utilisé pour une i-ème séquence de données dans une j-ème transmission répétée, $P(C_{i,j})$ représente un taux d'erreur de transmission du canal de fréquence $C_{i,j}$, et max() est un opérateur pour extraire la valeur maximale entre i=0 et N-1.

5. Circuit de commande configuré pour commander un appareil de communication sans fil (1), le circuit de commande amenant l'appareil de communication sans fil (1) à :

réaliser une attribution de ressources consistant à sélectionner un canal de fréquence avec la meilleure qualité de transmission parmi une pluralité de canaux de fréquence sur la base de la qualité de transmission de chaque canal de fréquence de la pluralité de canaux de fréquence et attribuer un intervalle de temps dans un motif de saut de fréquence correspondant au canal de fréquence sélectionné comme un intervalle de temps à utiliser pour la transmission d'une séquence de données ; et
commander la transmission de la séquence de données en utilisant l'intervalle de temps attribué dans l'attribution de ressources et le canal de fréquence,
**caractérisé en ce que**, lors de la réalisation d'une transmission répétée sur une pluralité de séquences de données, l'attribution de ressources est réalisée de telle sorte que l'expression

$$\max \left( \prod_{j=0}^{M-1} P\left( C_{i,j} \right) \right),$$

$i = 0$ *to*, $N - 1$ a une valeur minimale, où N désigne le nombre de séquences de données, M désigne le nombre de transmissions répétées dans une trame, $C_{i,j}$ représente un canal de fréquence d'un intervalle utilisé pour une i-ème séquence de données dans une j-ème transmission répétée, $P(C_{i,j})$ représente un taux d'erreur de transmission du canal de fréquence $C_{i,j}$, et max() est un opérateur pour extraire la valeur maximale entre i=0 et N-1.

6. Support de stockage dans lequel un programme pour commander un appareil de communication sans fil (1) est stocké, le programme étant configuré pour amener l'appareil de communication sans fil (1) à :

réaliser une attribution de ressources consistant à sélectionner un canal de fréquence avec la meilleure qualité de transmission parmi une pluralité
de canaux de fréquence sur la base de la qualité de transmission de chaque canal de fréquence de la pluralité de canaux de fréquence et attribuer un intervalle de temps dans un motif de saut de fréquence correspondant au canal de fréquence sélectionné comme un intervalle de temps à utiliser pour la transmission d'une séquence de données ; et
commander la transmission de la séquence de données en utilisant l'intervalle de temps attribué dans l'attribution de ressources et le canal de fréquence,
**caractérisé en ce que**, lors de la réalisation d'une transmission répétée sur une pluralité de séquences de données, l'attribution de ressources est réalisée de telle sorte que l'expression

$$\max \left( \prod_{j=0}^{M-1} P \left( C_{i,j} \right) \right),$$

$i$ = 0 to $N$ - 1 a une valeur minimale, où N désigne le nombre de séquences de données, M désigne le nombre de transmissions répétées dans une trame, $C_{i,j}$ représente un canal de fréquence d'un intervalle utilisé pour une i-ème séquence de données dans une j-ème transmission répétée, $P(C_{i,j})$ représente un taux d'erreur de transmission du canal de fréquence $C_{i,j}$, et max () est un opérateur pour extraire la valeur maximale entre i=0 et N-1.

# FIG.1

10

| 4 |
| TRAIN OPERATION MANAGEMENT APPARATUS |

| 7 |
| RADIO ENVIRONMENT MONITORING APPARATUS |

5

101

1A
GROUND STATION

101

1B
GROUND STATION

101

1C
GROUND STATION  ...

201

3

2  ON-BOARD STATION    TRAIN

6

# FIG.2

EP 3 780 805 B1

# FIG.3

TRAIN ⌇3

⌇201

ON-BOARD
STATION ⌇2

ON-BOARD
CONTROL
APPARATUS ⌇301

POSITION
DETECTION
APPARATUS ⌇302

# FIG.4

ON-BOARD STATION ⌇2

⌇201

RF UNIT ⌇202

MODULATION/
DEMODULA-
TION UNIT ⌇203

ON-BOARD
CONTROL
UNIT ⌇204

ON-BOARD CONTROL
APPARATUS

POSITION DETECTION
APPARATUS

TRANSMISSION
QUALITY
MEASURING UNIT ⌇205

# FIG.5

# FIG.6

# FIG.7

# FIG.8

# FIG.9

| | | | EVALUATION VALUE | | |
|---|---|---|---|---|---|
| | | | A | B | C |
| FREQUENCY CHANNEL | | 2 | 2 | 2 | 0 |
| | | 1 | 2 | 1 | 0 |
| | | 0 | 0 | 0 | 2 |

# FIG.10

# FIG.11

START

j=0 ~ S1

k=0 ~ S2

ALLOCATE SLOT CORRESPONDING TO FREQUENCY CHANNEL WITH BEST TRANSMISSION QUALITY AMONG RESOURCES THAT HAVE NOT YET BEEN ALLOCATED AS SLOT $S_{i,j}$ FOR j-TH CONTINUOUS TRANSMISSION OF DATA SEQUENCE i HAVING HIGHEST TRANSMISSION ERROR RATE $PT_{i,j-1}$ UP TO j-TH CONTINUOUS TRANSMISSION AMONG DATA SEQUENCES TO WHICH SLOTS FOR (j+1)-TH CONTINUOUS TRANSMISSION HAVE NOT YET BEEN ALLOCATED ~ S3

CALCULATE TRANSMISSION ERROR RATE $PT_{i,j}$ ~ S4

k=k+1 ~ S5

S6
k<N? — YES

NO

j=j+1 ~ S7

S8
j<M? — YES

NO

END

# FIG.12

| | | TRANSMISSION ERROR RATE |
|---|---|---|
| EVALUATION VALUE | 2 | $10^{-3}$ |
| | 1 | $10^{-2}$ |
| | 0 | $10^{-1}$ |

# FIG.13

# FIG.14

FRAME

| | #1 | #2 | #3 |
|---|---|---|---|

FREQUENCY CHANNEL

2 — (1) (2) (4) (5)

1 — (2) (3) (5) (6)

0 — (1) (3) (4) (6)

SLOT
0 1 2 3 4  0 1 2 3 4  0 1 2 3 4

TIME →

☐ LOW INTERFERENCE (EVALUATION VALUE=2)

▨ MEDIUM INTERFERENCE (EVALUATION VALUE=1)

▧ HIGH INTERFERENCE (EVALUATION VALUE=0)

# FIG.15

FRAME

| | #1 | #2 | #3 |
|---|---|---|---|

FREQUENCY CHANNEL

2 — (1) (2) (3) (4) (5)

1 — (1) (2) (3) (6) (6)

0 — (4) (5)

SLOT
0 1 2 3 4  0 1 2 3 4  0 1 2 3 4

TIME →

☐ LOW INTERFERENCE (EVALUATION VALUE=2)

▨ MEDIUM INTERFERENCE (EVALUATION VALUE=1)

▧ HIGH INTERFERENCE (EVALUATION VALUE=0)

# FIG.16

START

j=0   ~S1

k=0   ~S2

PREFERENTIALLY ALLOCATE SLOT CORRESPONDING TO FREQUENCY CHANNEL WITH BEST TRANSMISSION QUALITY AMONG RESOURCES THAT HAVE NOT YET BEEN ALLOCATED AS SLOT $S_{i,j}$ FOR j-TH CONTINUOUS TRANSMISSION OF DATA SEQUENCE i NOT USING THE FREQUENCY CHANNEL AND HAVING HIGHEST TRANSMISSION ERROR RATE $PT_{i,j-1}$ UP TO j-TH CONTINUOUS TRANSMISSION AMONG DATA SEQUENCES TO WHICH SLOTS FOR (j+1)-TH CONTINUOUS TRANSMISSION HAVE NOT YET BEEN ALLOCATED   ~S11

CALCULATE TRANSMISSION ERROR RATE $PT_{i,j}$   ~S4

k=k+1   ~S5

S6

k<N?   YES

NO

j=j+1   ~S7

S8

j<M?   YES

NO

END

# FIG.17

FRAME

LOW INTERFERENCE
(EVALUATION VALUE=2)

HIGH INTERFERENCE
(EVALUATION VALUE=0)

# FIG.18

FRAME

LOW INTERFERENCE
(EVALUATION VALUE=2)

HIGH INTERFERENCE
(EVALUATION VALUE=0)

# FIG.19

27

# FIG.20

**EP 3 780 805 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1612980 A1
- US 2005226198 A1
- WO 2005078976 A1
- JP 2009171078 A